# EUROPEAN PATENT APPLICATION

(11) **EP 0 973 015 A1**
(43) Date of publication of application: **19.01.2000**
(21) Application number: 99305612.6
(22) Date of filing: 15.07.1999
(51) Int. Cl.: G01F 11/40, G01F 11/46

(54) **Powder dispenser**

(30) Priority: 15.07.1998 GB 9815393
(71) Applicant: Smith, Sebastian, Thornton Heath, Surrey CR7 8AN (GB)
(72) Inventor: Smith, Sebastian, Thornton Heath, Surrey CR7 8AN (GB)
(74) Representative: Jehan, Robert

(57) **Abstract**

A milk powder dispenser with a scoop, a graduated container vessel 14 and a separator compartment 6 which is filled and emptied via two separator devices 2, 3. The dispenser is designed to be able to dispense a given quantity of milk powder in equal portions, one portion at a time.

## Description

The present invention relates to milk powder dispensers for use with baby milk powder.

Milk powder is used by millions of people world-wide every day. The most widely used type of milk powder is that which is intended for use in the preparation of baby milk. Generally, although by no means universally, the milk powder is contained within a cylindrical tub or can with a resealable lid. Usually the milk powder container includes a small scoop or spoon with which a specified amount of the powder can be dispensed.

For a given quantity of reconstituted milk, a certain number of spoonfuls of milk powder will need to be measured out. This requires scooping out a proportion of the desired amount one measure at a time with the provided spoon. This method is prone to inaccuracies in the final amount of powder dispensed; that is to say that too much or too little of the powder may have been added to the requisite volume of water. Also, it is likely that the repetitive action of scooping and transferring of the powder would lead to waste by spillages.

The present invention seeks to provide an improved milk powder dispenser.

According to an aspect of the present invention there is provided a powder dispenser as specified in claim 1.

A preferred embodiment of the invention will be described, by way of example only, with reference to the accompanying drawings which:
Figure 1 shows an elevation of a preferred embodiment of the dispenser;
Figure 2 shows a section of one of the separator devices of the dispenser of Figure 1;
Figure 3 shows a section of either the first or second vessel interface of the dispenser of Figure 1;
Figure 4 shows a section view of one of the separator devices in a fully non-coincident position with either the first or second vessel interfaces of the dispenser of Figure 1;
Figure 5 shows a section view of one of the separator devices in a fully coincident position with either the first or second vessel interfaces of the dispenser of Figure 1;
Figure 6 shows an alternative embodiment of the dispenser;
Figure 7 shows a view (not to scale) of the separator compartment.
Figure 8 shows another embodiment of the dispenser;
Figure 9 shows yet another embodiment of the dispenser;
Figure 10 shows a further embodiment of the dispenser;
Figure 11 shows an alternative embodiment of the dispenser;
Figure 12a shows another alternative embodiment of the dispenser;
Figures 12b and 12c show the plunger top of Figure 12a in plan and elevation view respectively.

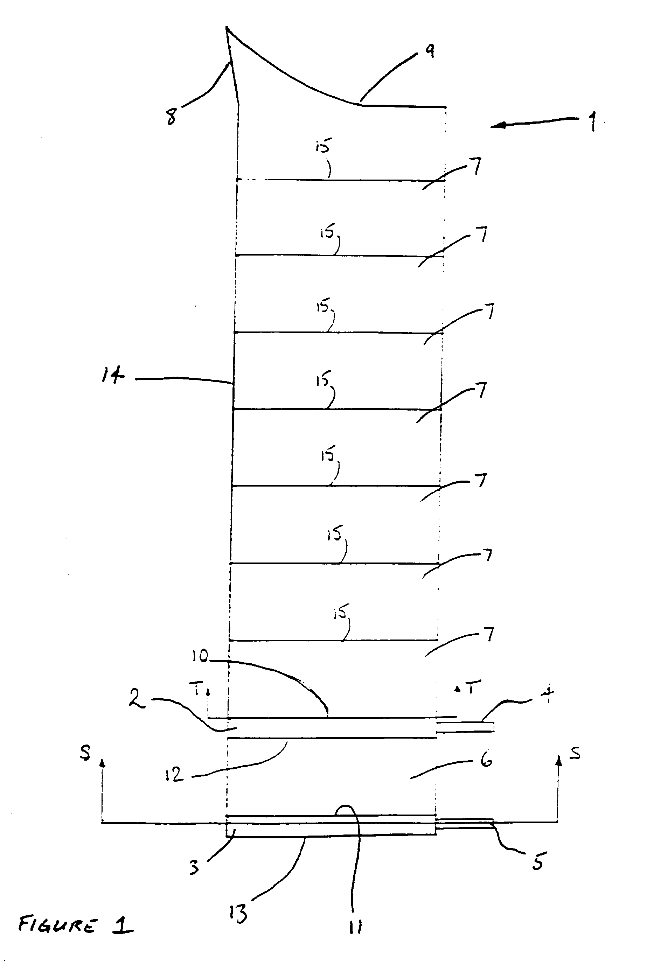

Figure 1 shows the powder dispenser 1 in elevation view. The vessel 14, which is preferably constructed from transparent or opaque plastic, has a scoop 8 extending from a sector of the mouth rim 9. Separator devices 2 and 3 reside within the body of the vessel 14 with levers 4 and 5 extending through arc-slots within the vessel wall so as to be accessible by a user. The vessel 14 is graduated into equal sections 7 by ruled divisions 15. Between the upper separator device 2 and the lower separator device 3 is the separator compartment 6. This compartment contains a volume that is equal to the volume contained within each section 7 above. Directly above the separator devices 2 and 3 and residing within a plane perpendicular to the plane of the sheet are the vessel interfaces 10 and 11 of the separator compartment 6.

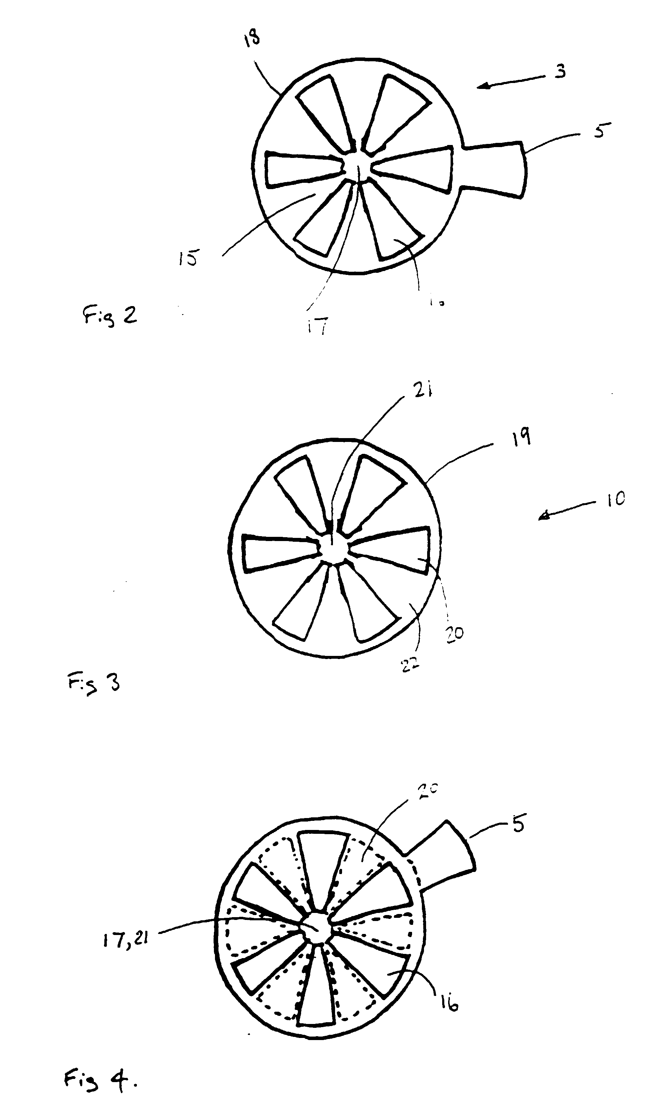

The cross-sectional view along line S-S of Figure 1 is shown in Figure 2. The separator mechanism 3 is a disc 18 with spokes 15 separating vacant segments 16 which are of the order 5mm at their widest part. The axis 17 of the disc is coincident with the axis of the vessel 14. It would be apparent to the skilled reader that a cross-sectional line drawn through the separator mechanism 2 in the same manner as that shown in Figure 1 would also give the same view as that shown in Figure 2.

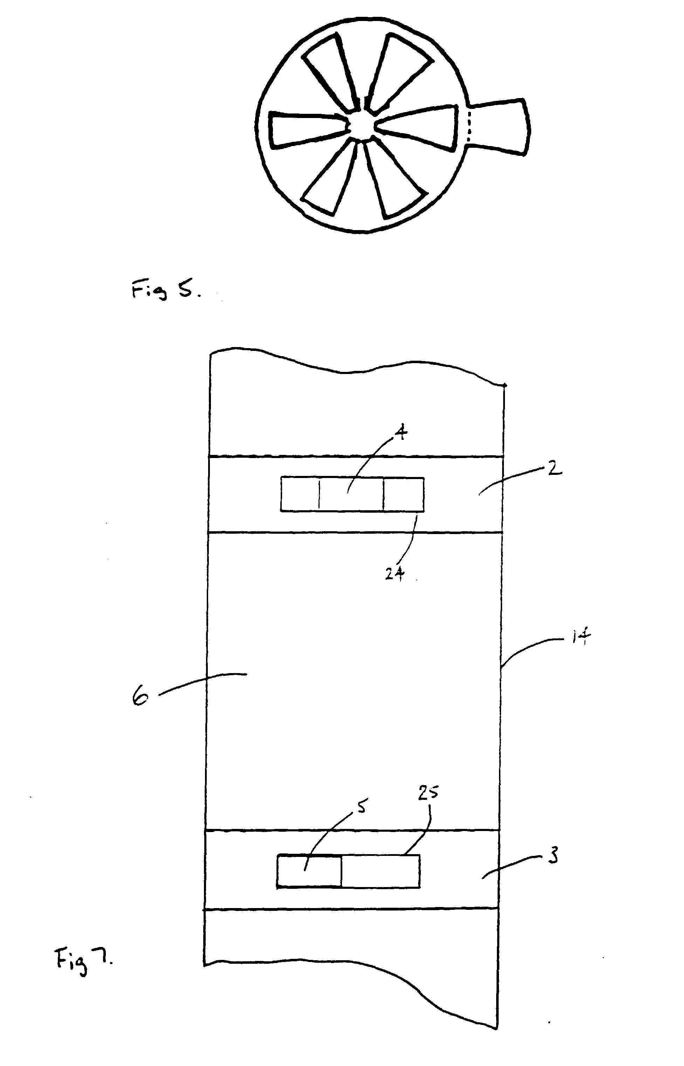

Figure 3 shows the cross-sectional view along line T-T of Figure 1. The vessel interface 10 above the upper separator device 2 consists of a disc 19 (which is a part of the one-piece vessel 14) with spokes 22 separating vacant segments 20. The vessel axis and the disc axis 21 are coincident. It would be apparent to the skilled reader that a cross-sectional line drawn through the lower vessel boundary 11 in the same manner as that shown in Figure 1 would also give the same view as that shown in Figure 3.

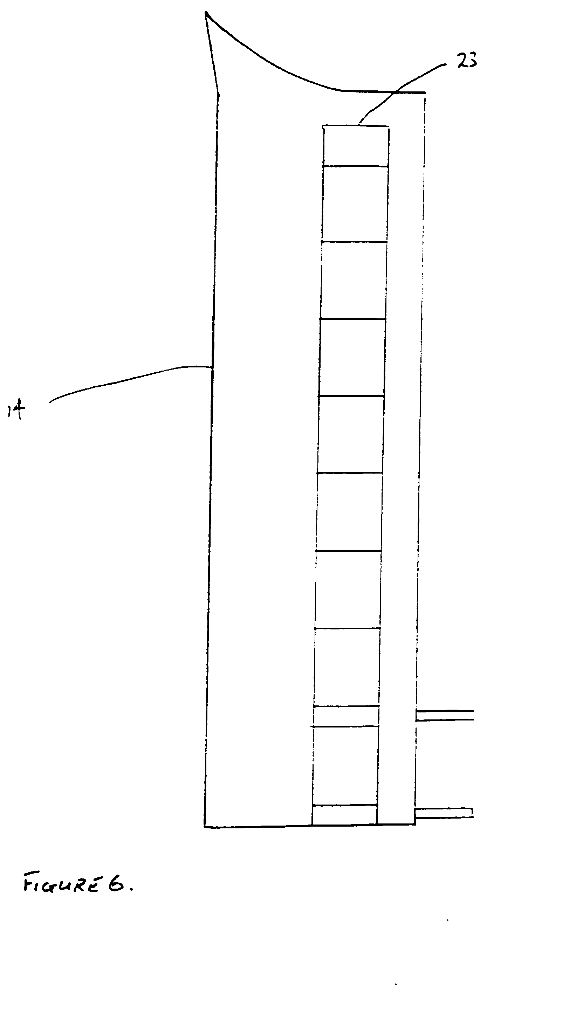

Figure 4 shows the situation when either the first separator device 2 and the first vessel interface 10 or the second separator device 3 and the second vessel interface 11 are in a fully non-coincident position. The vacant segments of the interface are coinciding with the spokes of the separator, and vice versa.

Conversely, Figure 5 depicts the situation when the separator device and the vessel interface are fully coincident.

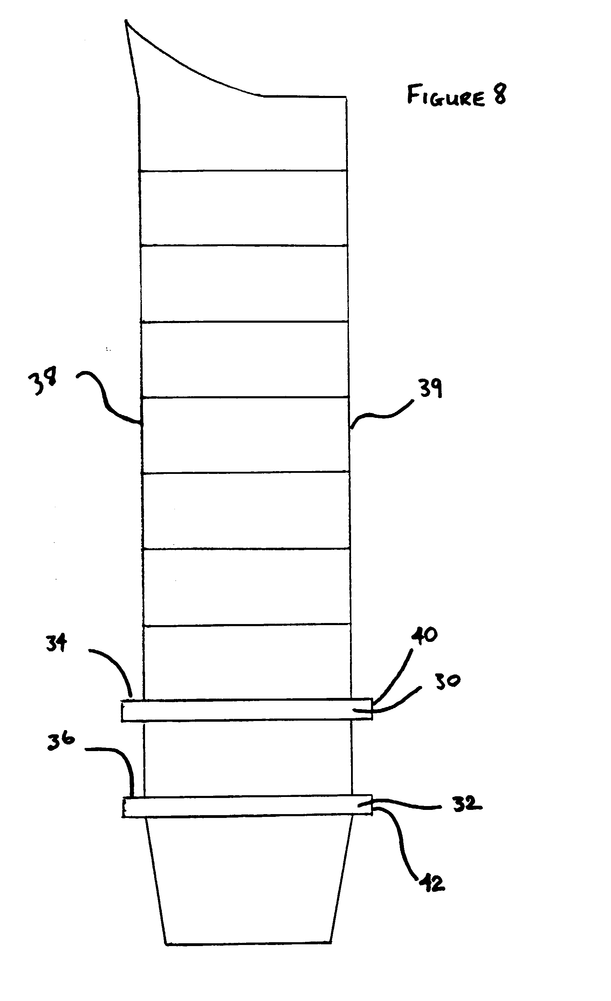

Figure 6 shows an alternative embodiment of the invention. Here, the vessel 14 is constructed of opaque plastic with a narrow transparent window 23 running down the side of the vessel.

Figure 7 shows an expanded view of the separator compartment 6 and separator devices. The second separator device 2 is in an open position with lever 4 in a mid-position of slot 24. First separator device 3 is in a closed position with lever 5 moved to the extremity of slot 25.

In the preferred embodiment the milk dispenser holds a predetermined number of measurements of milk powder. Once the dispenser has been loaded with milk powder the desired amount of powder can be delivered by operation of the levers 4 and 5. With the first separator device 3 in a closed position, the second separator device 2 can be opened. This will allow milk powder from the body of the vessel 14 to flow into the separator compartment 6. Once the compartment is full, the second separator device 2 can be closed and the measurement of powder can be dispensed by opening of the first separator device 3. For more than one measurement of milk powder the process is simply repeated.

As can be appreciated, there are many ways in which the dispenser may be operated. One such method might include filling the dispenser with more powder than is required, releasing the excess powder via operation of the separator devices, until the exact desired amount is left in the dispenser, then dispensing by pouring the powder out from the open end of the dispenser.

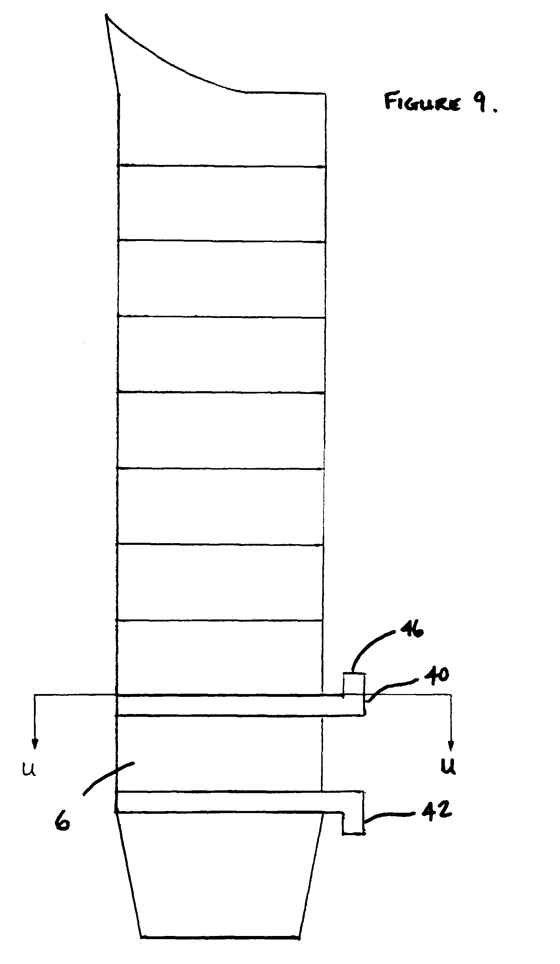

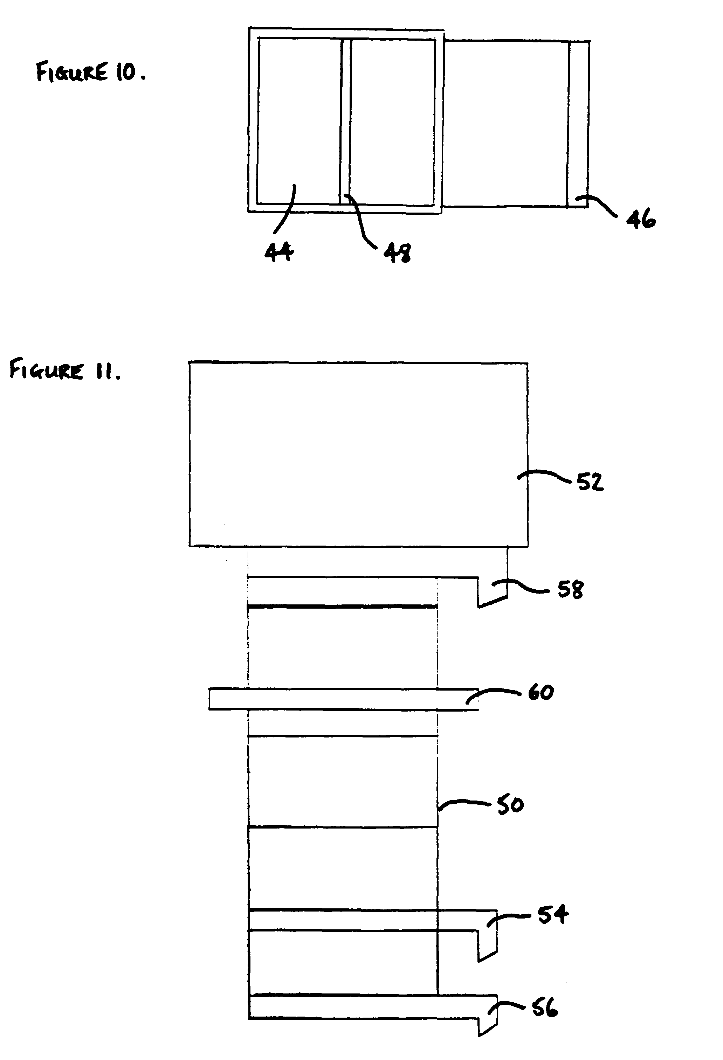

Figure 8 and Figure 9 show further embodiments of the powder dispenser. Here, instead of incorporating levers 4 and 5, the separator devices are twist mechanisms 30, 32 in Figure 8, and push-pull devices 40, 42 in the embodiment of Figure 9.

The twist mechanism 30, 32 operates in the same manner as described above differing in only that the twist mechanisms are activated in a similar fashion to a pepper mill. The circumferential positions 34, 36 of the mechanisms 30, 32 extend radially beyond the outer walls 38, 39 of the dispenser to provide gripping discs 40, 42 by which a user may rotate the twist mechanism from an open to a closed position and vice-versa.

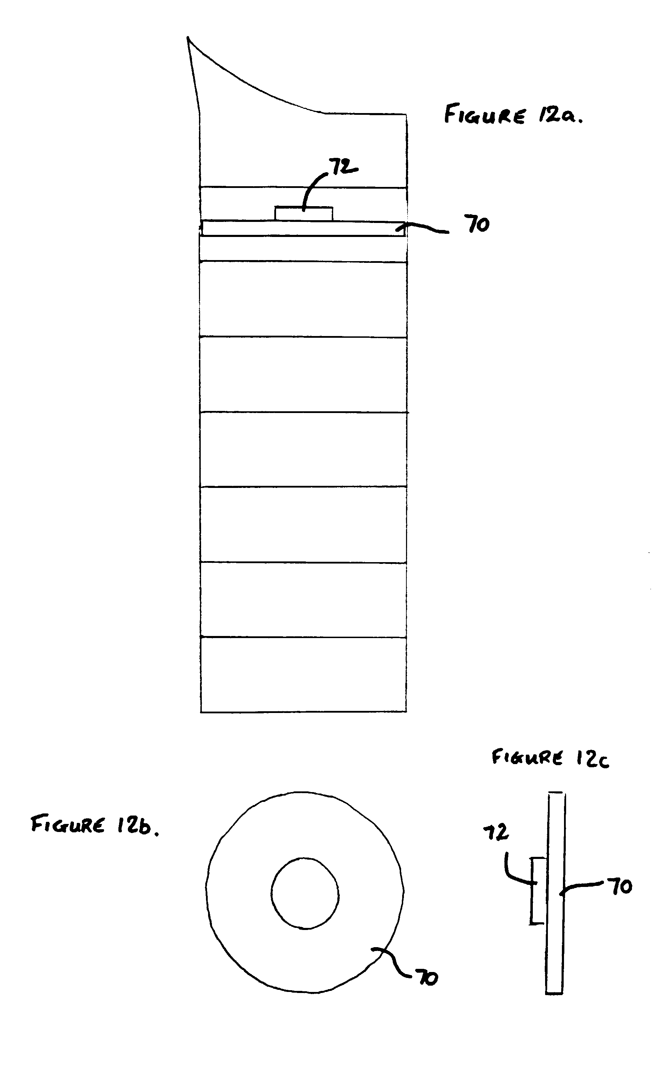

With reference to Figures 9 and 10 the dispenser may alternatively include push-pull devices 40, 42. The devices are pulled outward from the dispenser to reveal an interior opening 44. Figure 11 depicts a sectional view along the line U-U of Figure 9 with the device in a partially open position. The push-pull device 40 includes a gripping portion 46 and lip 48. The lip prevents the device 40 from being completely removed from the powder dispenser during operation. The reader will be aware that the dispenser is shown for simplicity, with a rectangular cross-section in Figure 10, but any shape of cross-section may be employed, for example circular or ovoid.

Another embodiment including some modifications is shown in Figure 11. The dispenser 50 is removably attached, by a screw thread for example, to a powder reservoir 52. The reservoir may be fixed to a support structure such as a kitchen work surface or cabinet. An additional push-pull device 58, which functions in the same names as described above, is included for controlled dispensing of powder from the reservoir 52 into the powder dispenser 50. A moveable marker 60 is provided for indicating the level to which the dispenser should be filled for the dispensing of a predetermined quantity of milk powder.

A procedure will now be described as an example of the dispenser in operation:
1. Ensure that push-pull device 56 is in a closed position.
2. Remove the dispenser from the reservoir 52.
3. Open push-pull device 54.
4. Decant the required pre-determined amount of powder into the dispenser 50.
5. Move marker 60 to coincide with the level of the powder.
6. Re-attach the dispenser to the reservoir 52 (ensuring that push-pull device 58 is in a closed position).

The powder is ready to be dispensed as required. It should be noted that as quantities of powder are dispatched via operation of devices 54 and 56, the marker 60 will be moved downwards accordingly if desired. Also, to refill the dispenser on subsequent occasions the operator may controllably fill the dispenser 50 by operation of push-pull device 58.

Figure 12 shows another embodiment of the powder dispenser. Separator devices or push-pull devices or twist mechanisms are not shown for purposes of clarity.

Additionally, a plunger top 70 may be included (the Figure shows the top in use and also in plan and elevation views). The top fits within the internal diameter of the dispenser. The operator is able to compact any powder contained within the dispenser by exerting a downward (as viewed) pressure on the handle 72, thus facilitating an accurate eye-line level of the powder.

The reader will be aware that other embodiments of the present invention are envisaged that incorporate a combination of some or all of the foregoing features.

## Claims

1. A powder dispenser (1) including a containment vessel (14) able to hold a plurality of predetermined measures of a powder, first dispensing means for dispensing from said vessel one predetermined measure of powder at a time and a second dispensing means for dispensing from said vessel more than one predetermined measure at a time.

2. A dispenser according to claim 1, wherein said vessel includes an open end for receiving powder.

3. A dispenser according to claim 1 or 2, wherein said vessel is marked (15) into visible sections (7) representative of said predetermined measure.

4. A dispenser according to claim 1, 2 or 3, wherein said first dispensing means includes a first separator device (3) for separating a predetermined measure of powder from powder in said vessel.

5. A dispenser according to any preceding claim, wherein said vessel (14) includes a separator compartment (16), said compartment delimited by said first dispensing means and said second dispensing means.

6. A dispenser according to any preceding claim, wherein said second dispensing means includes a second separator device (2).

7. A dispenser according to claim 4 or 6, wherein the first and second separator devices are spoked discs (18, 19) that are substantially coaxial with said vessel and are able to rotate about their axes 17, 21).

8. A dispenser according to claim 4 or 6, wherein the first and second separator devices are push-pull sliders (46, 42).

9. A dispenser according to claim 7, wherein the first and second separator devices include appending levers (4, 5) which protrude through slots in the wall of said dispenser.

10. A dispenser according to claim 7, wherein the interface between the vessel (14) and separator devices (2, 3) are spoked so as to mirror the spokes in the separator devices when said devices and said interfaces are in a coincident position and said interface spokes are separated by vacancies.

11. A milk powder dispenser according to any preceding claim wherein the dispenser includes a third separator device.
